# EUROPEAN PATENT APPLICATION

(11) **EP 4 364 873 A1**
(43) Date of publication of application: **08.05.2024**
(21) Application number: 22848962.1
(22) Date of filing: 19.04.2022
(51) Int. Cl.: B22F 10/38, B22F 10/25, B22F 10/66, B22F 10/85, B22F 12/41, B22F 12/90, B29C 64/209, B29C 64/393, B33Y 10/00, B33Y 30/00, B33Y 50/02

(54) **ADDITIVELY FABRICATED OBJECT MANUFACTURING METHOD AND ADDITIVE MANUFACTURING SYSTEM**

(30) Priority: 30.07.2021 JP 2021125246
(71) Applicant: Mitsubishi Heavy Industries, Ltd., Tokyo 100-8332 (JP)
(72) Inventor: TSUBOTA, Shuho, Tokyo 100-8332 (JP); KIMURA, Masahiro, Tokyo 100-8332 (JP); TAMARU, Tomoharu, Tokyo 100-8332 (JP); SANO, Yusuke, Tokyo 100-8332 (JP); BANNO, Yasutaka, Tokyo 100-8332 (JP)
(74) Representative: Cabinet Beau de Loménie
(86) International application number: PCT/JP2022/018104
(87) International publication number: WO 2023/007879

(57) **Abstract**

An additive manufactured object manufacturing method includes: a shell portion forming step of additively forming a shell portion corresponding to an outer portion of an additive manufactured object by a shell portion beads formed by weaving welding; and a core portion forming step of additively forming a core portion corresponding to an inner portion of the additive manufactured object by a core portion bead formed by welding.

## Description

### Technical Field

The present disclosure relates to an additive manufactured object manufacturing method and an additive manufacturing system.
Priority is claimed on Japanese Patent Application No. 2021-125246, filed on July 30, 2021, the content of which is incorporated herein by reference.

### Background Art

Patent Document 1 discloses a method of manufacturing an additive manufactured object by stacking a weld bead obtained by melting and solidifying a molten filler material.

### Citation List

### Patent Document

Patent Document 1: Japanese Unexamined Patent Application, First Publication No. 2021-24260

### Summary of Invention

### Technical Problem

However, in the additive manufactured object manufacturing method described in Patent Document 1, sagging or waviness may occur on the side surface of the additive manufactured object and the surface accuracy of the additive manufactured object may deteriorate.

The present disclosure has been made to solve the above-described problems and an object thereof is to provide an additive manufactured object manufacturing method and an additive manufacturing system capable of improving the surface accuracy of an additive manufactured object.

### Solution to Problem

In order to solve the above-described problems, an additive manufactured object manufacturing method according to the present disclosure includes: a shell portion forming step of additively forming a shell portion corresponding to an outer portion of an additive manufactured object by a shell portion bead formed by weaving welding; and a core portion forming step of additively forming a core portion corresponding to an inner portion of the additive manufactured object by a core portion bead formed by welding.

An additive manufacturing system according to the present disclosure includes: a welding head; and an additive forming control device which controls the welding head so that the welding head forms an additive manufactured object, wherein the additive forming control device includes a shell portion forming control unit which controls the welding head to additively form a shell portion corresponding to an outer portion of the additive manufactured object by a shell portion bead formed by weaving welding and a core portion forming control unit which controls the welding head to additively form a core portion corresponding to an inner portion of the additive manufactured object by a core portion bead formed by welding.

### Advantageous Effects of Invention

According to the additive manufactured object manufacturing method and the additive manufacturing system of the present disclosure, it is possible to improve the surface accuracy of the additive manufactured object.

### Brief Description of Drawings

FIG. 1 is a diagram showing a configuration of an additive manufacturing system according to a first embodiment of the present disclosure.
FIG. 2 is a diagram showing a main part of a laser welding head as an example of a welding head according to the first embodiment of the present disclosure.
FIG. 3 is a diagram showing a main part of an arc welding head as an example of the welding head according to the first embodiment of the present disclosure.
FIG. 4 is a functional block diagram showing a configuration of an additive forming control device according to the first embodiment of the present disclosure.
FIG. 5 is a flowchart showing a procedure of an additive manufactured object manufacturing method according to the first embodiment of the present disclosure.
FIG. 6 is a diagram schematically showing a shell portion forming step according to the first embodiment of the present disclosure.
FIG. 7 is a diagram showing a process in which a shell portion is formed by weaving welding in the shell portion forming step according to the first embodiment of the present disclosure.
FIG. 8 is a diagram schematically showing a core portion forming step according to the first embodiment of the present disclosure.
FIG. 9 is a diagram showing a process in which a core portion is formed by straight welding in the core portion forming step according to the first embodiment of the present disclosure.
FIG. 10 is a diagram schematically showing a modified example of the shell portion forming step according to the first embodiment of the present disclosure.
FIG. 11 is a diagram showing a configuration of an additive manufacturing system according to a second embodiment of the present disclosure.
FIG. 12 is a functional block diagram showing a configuration of an additive forming control device according to the second embodiment of the present disclosure.
FIG. 13 is a flowchart showing a procedure of an additive manufactured object manufacturing method according to the second embodiment of the present disclosure.
FIG. 14 is a diagram schematically showing a core portion forming step according to the second embodiment of the present disclosure.
FIG. 15 is a diagram schematically showing a surface state acquiring step according to the second embodiment of the present disclosure.
FIG. 16 is a diagram showing a process in which a shell portion is formed by weaving welding in a shell portion forming step according to the second embodiment of the present disclosure.
FIG. 17 is a diagram schematically showing a modified example of the shell portion forming step according to the second embodiment of the present disclosure.
FIG. 18 is a hardware configuration diagram showing a configuration of a computer according to each embodiment of the present disclosure.

### Description of Embodiments

### <First embodiment>

### (Additive manufacturing system)

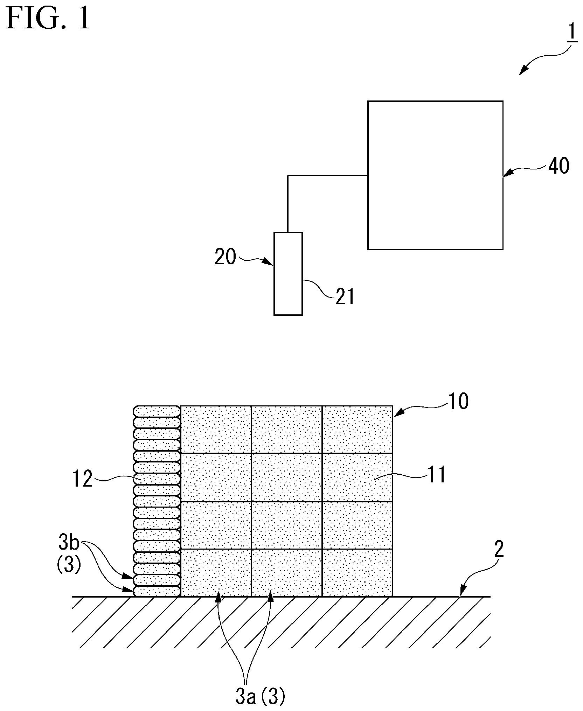

Hereinafter, an additive manufactured object production system 1 and a method of manufacturing an additive manufactured object 10 according to a first embodiment of the present disclosure will be described with reference to FIGS. 1 to 9.

The additive manufactured object production system 1 of this embodiment is used to produce the additive manufactured object 10 by performing overlaying on a surface of a stage 2 using a metallic molten filler material. For example, the additive manufactured object production system 1 of this embodiment can be applied to various three-dimensional additive manufacturing technologies such as a 3D printer.

As shown in FIG. 1, the additive manufactured object production system 1 includes a stage 2, a welding head 20, and an additive forming control device 40. FIG. 1 schematically shows a cross-section of the additive manufactured object 10.

### (Stage)

The stage 2 is a plate-shaped member formed of a metal material. The surface of the stage 2 on which the additive manufactured object 10 is produced is a flat surface. The surface of the stage 2 follows a horizontal plane. Hereinafter, a direction orthogonal to the surface of the stage 2 may be simply referred to as the "normal direction", and a direction parallel to the surface of the stage 2 may simply be referred to as the "plane direction".

### (Welding head)

The welding head 20 is disposed to face the surface of the stage 2. The welding head 20 melts a molten filler material and forms a droplet-shaped weld bead 3 on the surface of the stage 2. The molten filler material is a metal material. Examples of the molten filler material include stainless steel, titanium alloy, nickel alloy, aluminum alloy, chromium alloy, and the like. The molten filler material may be the same metal as the stage 2 or a different metal from the stage 2. A plurality of the weld beads 3 are formed continuously in the plane direction of the surface of the stage 2. By stacking the plurality of weld beads 3 in the normal direction of the surface of the stage 2, the desired additive manufactured object 10 is produced. The weld bead 3 is the minimum unit constituting the additive manufactured object 10. Therefore, the dimension of the weld bead 3 becomes a factor that determines the shape accuracy of the additive manufactured object 10.

Hereinafter, the maximum dimension of the weld bead 3 in the plane direction of the surface of the stage 2 may be simply referred to as a "bead width".

In the manufacturing process of the additive manufactured object 10, since the weld bead 3 appears to be stippled, the size of the bead width may be expressed as the resolution of the weld bead 3. Hereinafter, it is assumed that the resolution of the weld bead 3 decreases as the bead width increases and the resolution of the weld bead 3 increases as the bead width decreases.

The welding head 20 can form two types of weld beads 3, that is, a weld bead 3 having a first resolution and a weld bead 3 having a second resolution higher than the first resolution.

The welding head 20 includes a head body 21 which is movable relative to the stage 2. The welding head 20 forms the weld beads 3 while moving the head body 21. The welding head 20 can swing a heat source and a molten filler material in any direction relative to the moving direction of the head body 21. Hereinafter, the moving direction of the head body 21 during welding may be referred to as the welding direction. Weaving welding can be performed as welding performed by swinging the heat source and the molten filler material. Furthermore, straight welding can be performed as welding performed without swinging the heat source and the molten filler material relative to the welding direction.

Furthermore, the welding head 20 may be a laser welding head 20a or an arc welding head 20b. The welding method in this embodiment can be changed as appropriate.

### (Laser welding head)

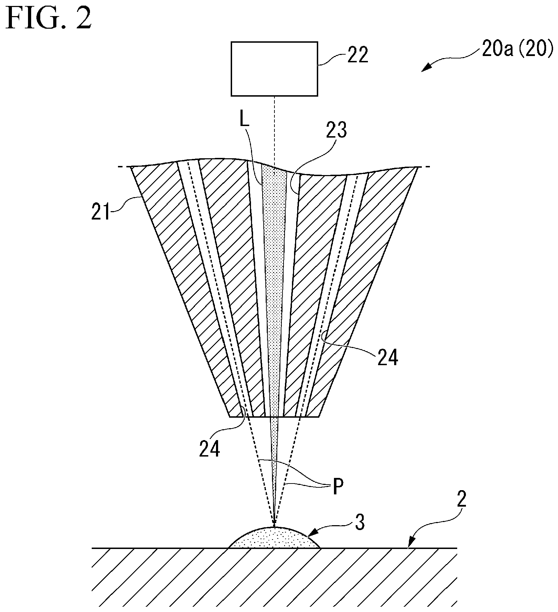

As shown in FIG. 2, when the welding head 20 is the laser welding head 20a, a heat source is a laser beam L. Further, for example, powder P is used as the molten filler material. The laser welding head 20a includes a head body 21, a laser source 22, and a powder supply unit (not shown).

The head body 21 is provided at a position away from the surface of the stage 2 in the normal direction. The head body 21 is formed in a truncated cone shape that tapers toward the surface of the stage 2. The center axis of the head body 21 extends in the normal direction of the surface of the stage 2. The center axis of the head body 21 may be slightly inclined with respect to the normal line of the surface of the stage 2. The head body 21 is provided with a laser passage 23 and a powder supply path 24.

The laser passage 23 penetrates the head body 21 along the center axis of the head body 21. The laser passage 23 is formed in a tapered shape that tapers toward the surface of the stage 2 in the side view.

The powder supply path 24 penetrates the head body 21 in the axial direction. The powder supply path 24 is formed along the outer peripheral surface of the head body 21. The powder supply path 24 is formed symmetrically with the laser passage 23 interposed there between in the side view. As the powder supply path 24 approaches the stage 2, the powder supply path gradually approaches the center axis of the head body 21 linearly.

The laser source 22 is disposed at a position away from the stage 2. The laser source 22 emits a laser beam L toward the surface of the stage 2. The laser beam L travels straight in the axial direction inside the laser passage 23 of the head body 21 and is irradiated onto the surface of the stage 2. A spot of the laser beam L is generated on the surface of the stage 2.

The powder supply unit (not shown) supplies the powder P to the head body 21. The powder P is supplied into the powder supply path 24 of the head body 21. In the powder supply path 24, a carrier gas flows toward the surface of the stage 2. Therefore, the powder P is injected to the spot of the laser beam L on the stage 2 by the flow of the carrier gas inside the powder supply path 24. The injected powder P is melted by the laser beam L to become the weld bead 3.

When the welding head 20 is the laser welding head 20a, it is possible to adjust the shape and the bead width of the weld bead 3 by adjusting the spot shape of the laser beam L or the energy of the laser beam L. The spot shape of the laser beam L changes depending on optical elements (not shown) through which the laser beam L passes before the laser beam is irradiated onto the surface of the stage 2. The optical elements are, for example, a diffuser plate and a focusing lens. The spot shape of the laser beam L can be controlled by accurately controlling the curvature of the optical elements.

### (Arc welding head)

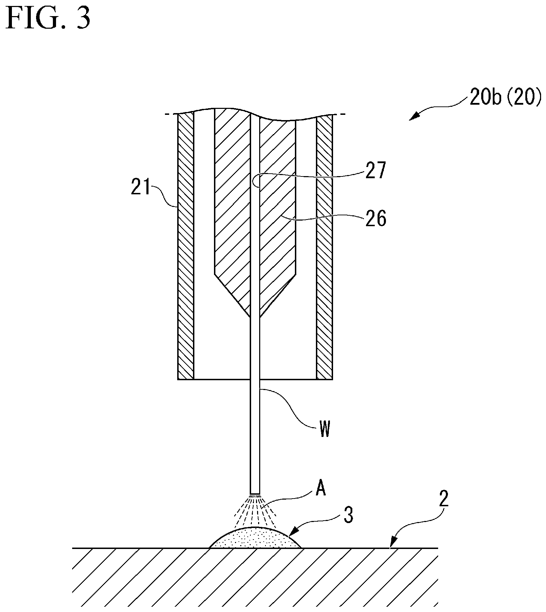

As shown in FIG. 3, when the welding head 20 is the arc welding head 20b, the heat source is arc A. For example, a wire W is used as the molten filler material. The arc welding head 20b includes the head body 21, an electrode 26, and the wire W.

The head body 21 is provided at a position away from the surface of the stage 2 in the normal direction. The head body 21 is formed in a cylindrical shape. The center axis of the head body 21 follows the normal direction of the surface of the stage 2.

The electrode 26 is formed in a bar shape which extends toward one side. The electrode 26 is inserted through the head body 21. The end of the electrode 26 on the side of the surface of the stage 2 is covered by the head body 21 from the outside in the radial direction.

Further, a wire insertion passage 27 is formed in the electrode 26 to penetrate in the axial direction. The wire W is inserted through the wire insertion passage 27. The tip of the wire W is covered by the head body 21 from the outside in the radial direction while protruding from the electrode 26. A positive voltage is applied to the wire W via the electrode 26. When a voltage difference between the wire W and the stage 2 exceeds a predetermined value, the air between the wire W and the stage 2 undergoes dielectric breakdown and discharges. Accordingly, the arc A is generated in the space between the wire W and the stage 2. The tip of the wire W is melted by the arc A to become the weld bead 3. The wire W is sequentially sent toward the arc A by the amount necessary to form the weld bead 3.

When the welding head 20 is the arc welding head 20b, it is possible to adjust the shape and the bead width of the weld bead 3 by adjusting the voltage applied to, for example, the wire W to adjust the energy of the arc A.

Furthermore, in the above-described embodiments, the welding head 20 is the laser welding head 20a or the arc welding head 20b, but the present disclosure is not limited thereto. For example, the welding head 20 may be an electron beam forming head. The electron beam forming head uses the metal wire W as the molten filler material similar to the arc welding head 20b. The electron beam forming head melts the wire W by an electron beam to form the weld bead 3.

In this way, a method in which the metallic molten filler material is supplied from the welding head 20 and is melted by a heat source such as a laser beam L, an arc A, and an electron beam to be stacked at a desired location is called a "deposition method".

### (Additive forming control device)

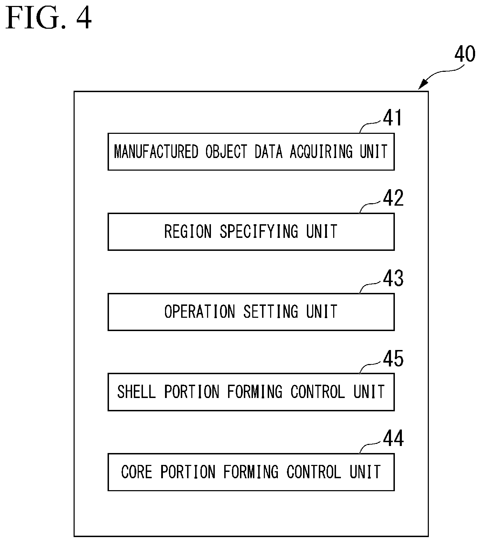

Subsequently, the configuration of the additive forming control device 40 of this embodiment will be described with reference to FIG. 4.
The additive forming control device 40 controls the welding head 20 so that the welding head 20 forms the additive manufactured object 10. The additive forming control device 40 is connected to the welding head 20 by or without wire.

The additive forming control device 40 includes processing units such as a manufactured object data acquiring unit 41, a region specifying unit 42, an operation setting unit 43, a shell portion forming control unit 45, and a core portion forming control unit 44.

### (Manufactured object data acquiring unit)

The manufactured object data acquiring unit 41 acquires the manufactured object data of the additive manufactured object 10. The manufactured object data includes data of the final shape of the additive manufactured object 10.

Here, the additive manufactured object 10 can be distinguished into a core portion 11 corresponding to an inner portion of the additive manufactured object 10 and a shell portion 12 corresponding to an outer portion of the additive manufactured object 10 (see FIG. 1).

### (Region specifying unit)

The region specifying unit 42 specifies a core region for forming a core portion 11 and a shell region for forming a shell portion 12 on the basis of the final shape of the additive manufactured object 10. Hereinafter, the weld bead 3 for additively forming the shell portion 12 is referred to as a shell portion bead 3b and the weld bead 3 for additively forming the core portion 11 is referred to as a core portion bead 3a. The shell portion bead 3b and the core portion bead 3a are formed of the same molten filler material.

### (Operation setting unit)

The operation setting unit 43 sets the operation of the welding head 20 to form the core portion 11 on the basis of the core region and sets the operation of the welding head 20 to form the shell portion 12 on the basis of the shell region.

### (Shell portion forming control unit)

The shell portion forming control unit 45 controls the welding head 20 to additively form the shell portion 12 by stacking the shell portion beads 3b.

### (Core portion forming control unit)

The core portion forming control unit 44 controls the welding head 20 to additively form the core portion 11 by stacking the core portion beads 3a.

### (Procedure of additive manufactured object manufacturing method)

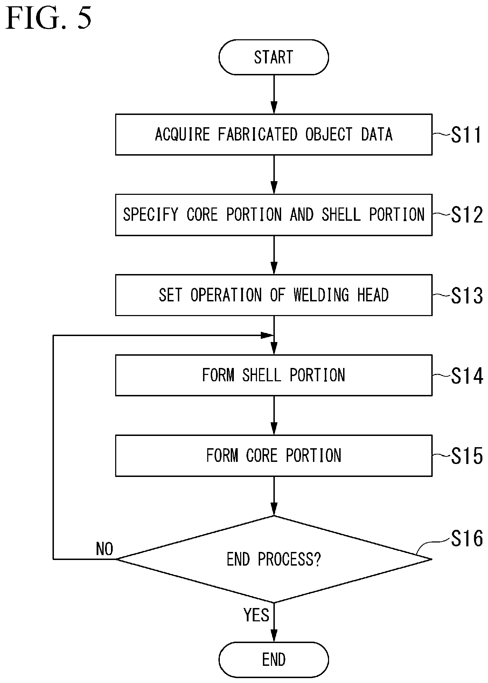

Hereinafter, the procedure of the method for producing the additive manufactured object 10 using the additive manufactured object production system 1 will be described with reference to the flowchart shown in FIG. 5. The method for producing the additive manufactured object 10 includes a manufactured object data acquiring step S11, a region specifying step S12, an operation setting step S13, a shell portion forming step S14, and a core portion forming step S15.

In the manufactured object data acquiring step S11, the manufactured object data acquiring unit 41 acquires the manufactured object data of the additive manufactured object 10.

The region specifying step S12 is performed after the manufactured object data acquiring step S11. In the region specifying step S12, the region specifying unit 42 specifies the core region and the shell region on the basis of the manufactured object data.

Here, as shown in FIG. 1, the additive manufactured object 10 can be distinguished into the core portion 11 which is the inner portion of the additive manufactured object 10 and the shell portion 12 which is the outer portion of the additive manufactured object 10. In the region specifying step S12, an outer portion having a predetermined thickness and including the surface of the manufactured object in the manufactured object data is specified as the shell region and an inner portion in relation to the shell region is specified as the core region.

The operation setting step S13 is performed after the region specifying step S12. In the operation setting step S13, the operation setting unit 43 sets the operation of the welding head 20 to form the shell portion 12 on the basis of the shell region and sets the operation of the welding head 20 to form the core portion 11 on the basis of the core region.

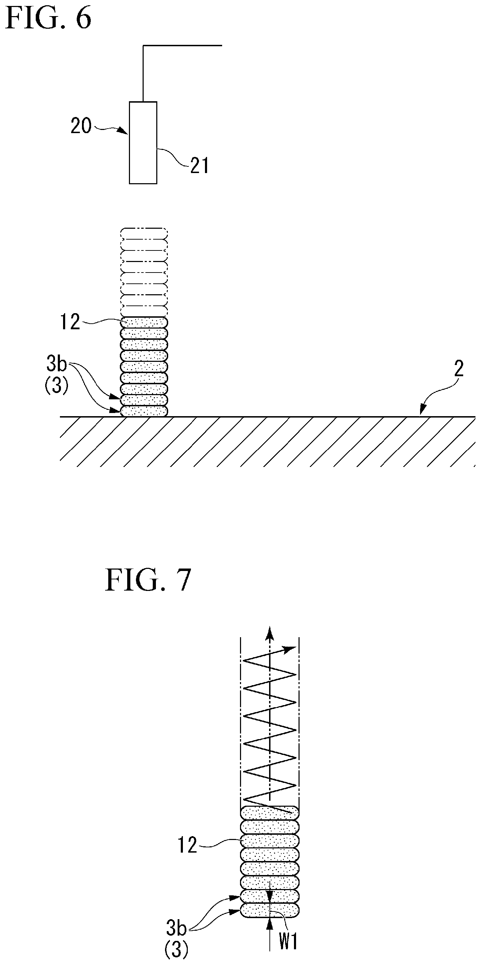

The shell portion forming step S14 is performed after the operation setting step S13. As shown in FIG. 6, in the shell portion forming step S14, the shell portion 12 is additively formed by stacking the shell portion beads 3b. The shell portion bead 3b is formed to have a second resolution higher than the first resolution. FIG. 6 shows a cross-section of the formed shell portion 12. In the shell portion forming step S14, the shell portion forming control unit 45 additively forms the shell portion 12 in the shell region by controlling the welding head 20 on the basis of the setting of the operation setting unit 43.

The head body 21 of the welding head 20 is disposed at a position separated from the shell region on the surface of the stage 2 by a predetermined distance in the normal direction. The head body 21 moves in the plane direction of the surface of the stage 2 while keeping the separation distance from the surface of the stage 2. More specifically, the head body 21 moves in a direction perpendicular to the direction of the reciprocating motion while repeating the linear reciprocating motion along the plane direction. The welding head 20 repeatedly stops the head body 21 and forms the shell portion beads 3b. In this way, the plurality of shell portion beads 3b are formed continuously in the shell region on the surface of the stage 2. All of the shell portion beads 3b formed as described above have substantially the same resolution. The first layer of the shell portion 12 is formed by integrating the plurality of shell portion beads 3b.

When the first layer is formed, the process will move on to the forming of the second layer. In the forming of the second layer, the head body 21 is separated from the surface of the stage 2 in the normal direction by the height of one layer. Then, the welding head 20 is operated in the same manner as when forming the first layer to form the second layer on the first layer. The third and subsequent layers are formed in the same manner as the second layer.

In this way, a plurality of layers of the shell portion 12 are formed by one shell portion forming step S14. It is preferable that each layer of the shell portion 12 is formed only on the forward movement path during the reciprocating motion of the head body 21.

As shown in FIG. 7, the shell portion 12 is formed to extend along the welding direction when viewed from the normal direction. FIG. 7 is a schematic diagram of the shell portion 12 in the middle of manufacturing when viewed from the normal direction. The shell portion beads 3b constituting the shell portion 12 are formed by weaving welding. In the weaving welding, the shell portion bead 3b is formed while swinging both the heat source and the molten filler material in a direction perpendicular to the welding direction and in a plane direction. The shell portion bead 3b is formed in a rectangular shape with the welding direction as the short side direction when viewed from the normal direction. The width W1 of the shell portion bead 3b in the welding direction is, for example, 1/10 or more and 1/2 or less and preferably 1/8 or more and 1/6 or less of the width of the shell portion bead 3b in the direction perpendicular to the welding direction.

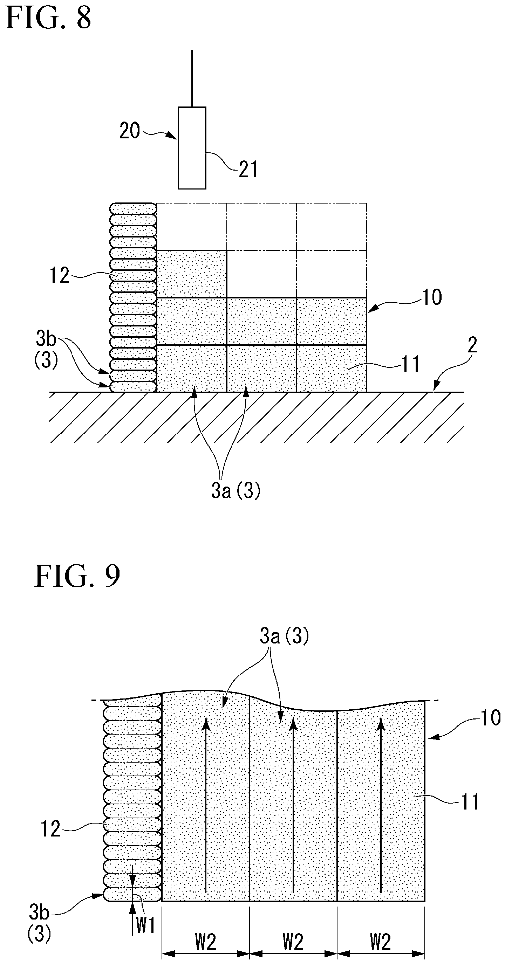

The core portion forming step S15 is performed after the shell portion forming step S14. As shown in FIG. 8, in the core portion forming step S15, the core portion beads 3a additively forms the core portion 11 on the surface of the stage 2 and the inside of the shell portion 12 formed by the immediately preceding shell portion forming step S14. FIG. 8 shows a cross-section of the core portion 11 and the shell portion 12 formed as described above. In the core portion forming step S15, the core portion forming control unit 44 additively forms the core portion 11 in the core region by controlling the welding head 20 on the basis of the setting of the operation setting unit 43.

In the core portion forming step S15, the core portion 11 is formed by the same height as the shell portion 12 formed in the immediately preceding shell portion forming step S14. The head body 21 of the welding head 20 moves in the plane direction while repeating the linear reciprocating motion similar to the shell portion forming step S14. The welding head 20 repeatedly stops the head body 21 and forms the core portion beads 3a. In this way, the plurality of core portion beads 3a are formed continuously inside the shell portion 12 when viewed from the normal direction. All of core portion beads 3a formed as described above have substantially the same resolution. The first layer of the core portion 11 is formed by integrating the plurality of core portion beads 3a.

When the first layer is formed, the process will move on to the forming of the second layer. In the forming of the second layer, the head body 21 is separated from the surface of the stage 2 by the height of one layer in the normal direction. Then, the welding head 20 is operated in the same manner as when forming the first layer and forms the second layer on the first layer. The third and subsequent layers are formed in the same manner as the second layer. The core portion 11 is formed until the core portion reaches the same height as the shell portion 12 formed by the immediately preceding shell portion forming step S14.

As shown in FIG. 9, the core portion beads 3a are formed by straight welding. FIG. 9 is a schematic diagram of the core portion 11 in the middle of manufacturing when viewed from the normal direction. In straight welding, the core portion beads 3a are formed without swinging both the heat source and the molten filler material relative to the welding direction. The width W2 of the core portion bead 3a in a direction perpendicular to the welding direction is, for example, 2 or more and 10 or less and preferably 6 or more and 8 or less of the width W1 of the shell portion bead 3b.

The core portion forming step S15 and the shell portion forming step S14 may be performed by laser welding using powder P as a molten filler material or may be performed by welding of arc A using a wire W as a molten filler material.

After the core portion forming step S15, a determination of the end of the process is made. In the determination of the end of the process, the additive forming control device 40 determines whether the forming of the additive manufactured object 10 ends on the basis of the manufactured object data (step S16). When the additive forming control device 40 determines that the forming of the additive manufactured object 10 does not end (step S16; NO), the process proceeds to the shell portion forming step S14.

When the additive forming control device 40 determines that the forming of the additive manufactured object 10 ends (step S16; YES), the operation of the welding head 20 is ended. Then, finishing processing is performed on the surface of the additive manufactured object 10. Examples of the finishing processing include cutting, polishing, and the like. The finishing processing improves the surface accuracy of the additive manufactured object 10. Furthermore, the finishing processing can be omitted as appropriate.

In this way, the producing of the additive manufactured object 10 is completed.

### (Operation and effect)

According to the additive manufactured object production system 1 and the method for producing the additive manufactured object 10 described above, it is possible to more densely form the shell portion 12 by forming the shell portion bead 3b using weaving welding. As a result, it is possible to improve the surface accuracy of the additive manufactured object 10.

Here, in general, the weaving welding has a slower welding speed than the straight welding. However, it is possible to suppress variations in the amount of the weld bead 3 in the welding area compared to the straight welding by performing the weaving welding. Further, since it is possible to reduce the number of welding passes compared to the straight welding by performing the weaving welding, it is possible to easily perform the heat input control.

Thus, it is possible to suppress variations in the amount of the shell portion beads 3b in the welding area by forming the shell portion beads 3b using the weaving welding. Accordingly, since it is possible to form the shell portion 12 with high accuracy, it is possible to improve the surface accuracy of the additive manufactured object 10. Further, since it is possible to reduce the number of welding passes, it is possible to easily perform the heat input control.

Further, for example, it is possible to additively form the shell portion 12 by the weaving welding and to additively form the core portion 11 by the straight welding. In this case, it is possible to improve the accuracy of the shell portion 12 compared to a case in which the shell portion 12 is additively formed by the straight welding and to improve the surface accuracy of the additive manufactured object 10 while shortening the time required for producing the additive manufactured object 10 compared to a case in which the entire additive manufactured object 10 is additively formed by the weaving welding.

Further, in this embodiment, the core portion 11 is additively formed after the shell portion 12 is additively formed. Accordingly, it is possible to form the core portion 11 so that the side surface of the core portion 11 is supported by the shell portion 12. Therefore, it is possible to suppress the occurrence of sagging on the side surface of the core portion 11 due to its own weight. Thus, it is possible to improve the surface accuracy of the additive manufactured object 10.

Furthermore, in this embodiment, the core portion is formed by stacking the core portion beads 3a each size of which is corresponding to the first resolution and the shell portion is formed by stacking the shell portion beads 3b each size of which is corresponding to the second resolution. Therefore, it is possible to improve the surface accuracy of the additive manufactured object 10 immediately after the additive manufacturing compared to a case in which the core portion 11 and the shell portion 12 are formed by stacking the weld beads 3 each size of which is corresponding to the first resolution. Accordingly, since the amount of finishing processing can be reduced, it is possible to shorten the time required for the finishing processing. Further, manufacturing costs can be reduced.
Further, it is possible to shorten the time required for producing the entire additive manufactured object 10 compared to a case in which the core portion 11 and the shell portion 12 are formed by stacking the weld beads 3 each size of which is corresponding to the second resolution higher than the first resolution. Thus, it is possible to efficiently form the additive manufactured object 10.

Here, the spot shape of the laser beam L for laser welding is easy to adjust. Therefore, when laser welding is used, the resolution of the weld bead 3 can be easily adjusted by adjusting the spot shape of the laser beam L. By increasing the resolution of the weld bead 3, it is possible to improve the accuracy of the additive manufactured object 10.

Further, even when using electron beam welding, the same effects as when using laser welding can be achieved.
However, laser welding has an advantage over electron beam welding in that it does not require a vacuum state and can be made smaller. On the other hand, since electron beam welding is performed in a vacuum state compared to laser welding, it has advantages in that defects can be reduced when the molten filler material is metal that is easily oxidized and that the energy efficiency can be made close to 100% because the electron beam is not reflected.

Further, since the weld beads 3 can be formed at a high speed when using the arc welding, it is possible to shorten the time required for producing the additive manufactured object 10. Further, since the wire W is relatively inexpensive as the molten filler material, manufacturing costs can be reduced.

Further, in this embodiment, the weaving welding is performed by swinging both the heat source and the molten filler material in the shell portion forming step S14. Since the welding head 20 may be controlled so that the heat source and the molten filler material follow the same trajectory, the weaving welding can be easily controlled.

### <Modified example of first embodiment>

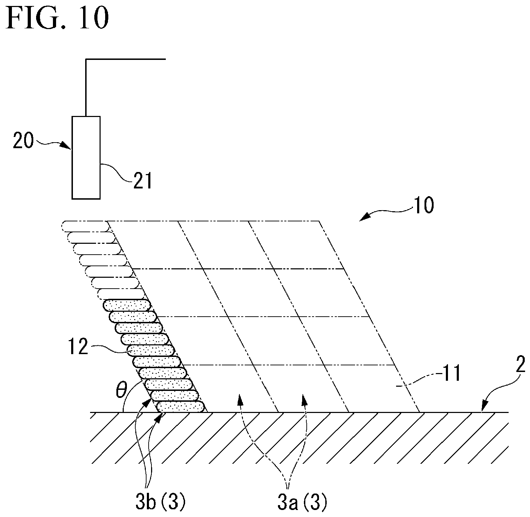

Here, as a modified example of the first embodiment, for example, a configuration shown in FIG. 10 may be adopted. This modified example is different from the first embodiment in the shell portion forming control unit 45 of the additive manufactured object production system 1 and the shell portion forming step S14 of the method for producing the additive manufactured object 10.

### (Shell portion forming control unit)

The shell portion forming control unit 45 controls the welding head 20 to form the shell portion 12 so that the outer surface of the shell portion 12 has an overhang shape forming an acute angle with respect to the horizontal plane.

### (Procedure of method of manufacturing additive manufactured object)

The method for producing the additive manufactured object 10 is performed by the same procedure as that of the above-described first embodiment. First, the manufactured object data acquiring step S11 is performed. The region specifying step S12 is performed after the manufactured object data acquiring step S11. The operation setting step S13 is performed after the region specifying step S12. The shell portion forming step S14 is performed after the operation setting step S13. The core portion forming step S15 is performed after the shell portion forming step S14. A determination of the end of the process is made after the core portion forming step S15. Hereinafter, the shell portion forming step S14 different from the first embodiment will be described.

### (Shell portion forming step)

As shown in FIG. 10, in the shell portion forming step S14, when additively forming the second layer of the shell portion 12, the second layer is additively formed at a position slightly shifted from the first layer in a direction intersecting the extension direction of the first layer. Hereinafter, the direction in which the first layer is shifted from the second layer may be simply referred to as the "slide direction". Similarly, when additively forming each of other layers of the shell portion 12, each layer of the shell portion 12 is sequentially and additively formed with a slight shift in the slide direction with respect to the previous layer. The shell portion 12 which is formed in this way has an overhang shape in which the outer surface forms an acute angle with respect to the horizontal plane. That is, the outer surface of the additive manufactured object 10 is formed at an acute angle with respect to the horizontal plane. The angle θ between the outer surface of the additive manufactured object 10 and the surface of the stage 2 is, for example, 45° or more and 89° or less.

### (Operation and effect)

According to this modified example, it is possible to additively form the shell portion 12 in an overhang shape before additively forming the core portion 11. Since the shell portion 12 forms only the surface of the additive manufactured object 10, the shell portion is lighter than the core portion 11 in many cases. Therefore, the shell portion 12 is less likely to collapse under its own weight before solidifying than the core portion 11. In addition, the core portion 11 can be additively formed in an overhang shape after the shell portion 12 is solidified. After the core portion 11 is additively formed, the core portion 11 is solidified while being supported by the shell portion 12. Therefore, it is possible to suppress the core portion 11 from collapsing under its own weight before solidifying. Thus, it is possible to form the additive manufactured object 10 in an overhang shape without decreasing the accuracy of the additive manufactured object 10.

### <Second embodiment>

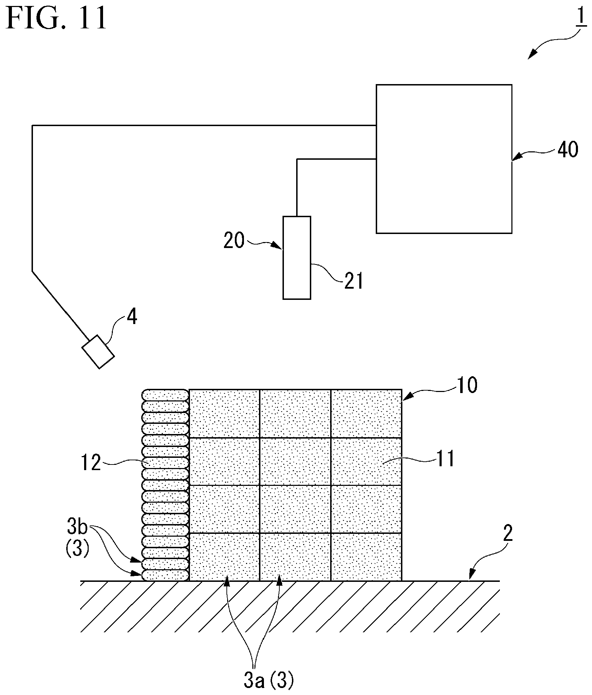

Hereinafter, the additive manufactured object production system 1 and the method for producing the additive manufactured object 10 according to a second embodiment of the present disclosure will be described with reference to FIGS. 11 to 16. In the second embodiment, the same reference numerals are given to the same components as in the first embodiment, and detailed descriptions are omitted as appropriate. The additive manufactured object production system 1 of the second embodiment further includes a condition detection unit 4 and the additive forming control device 40 does not include the region specifying unit 42 of the first embodiment and further includes a surface state acquiring unit 46. In the method for producing the additive manufactured object 10 of the second embodiment, a shell portion forming step S25 is performed after a core portion forming step S23 and a surface state acquiring step S24 of acquiring the unevenness state of the surface of the core portion 11 is further provided between the core portion forming step S23 and the shell portion forming step S25.

### (Additive manufacturing system)

As shown in FIG. 11, the additive manufactured object production system 1 includes the stage 2, the welding head 20, the additive forming control device 40, and the condition detection unit 4.

### (Condition detection unit)

The condition detection unit 4 is a device which detects the unevenness state of the surface of the core portion 11. Examples of the unevenness state of the surface of the core portion 11 include surface roughness of the core portion 11. Examples of the condition detection unit 4 include a sensor, a camera, and the like.

### (Additive forming control device)

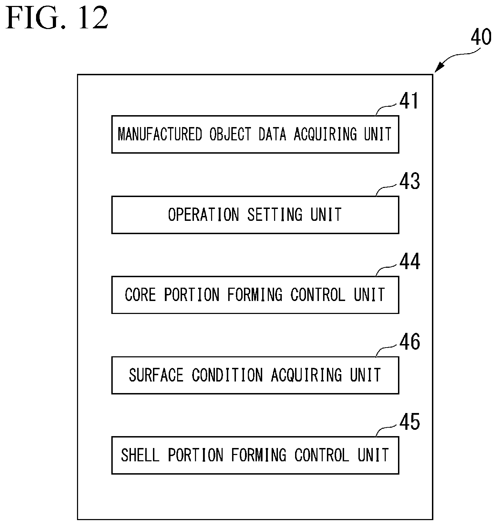

Subsequently, the configuration of the additive forming control device 40 of this embodiment will be described with reference to FIG. 12.

As shown in FIG. 12, the additive forming control device 40 includes the manufactured object data acquiring unit 41, the operation setting unit 43, the core portion forming control unit 44, the surface state acquiring unit 46, and the shell portion forming control unit 45.

### (Surface state acquiring unit)

The surface state acquiring unit 46 controls the condition detection unit 4 to acquire the unevenness state of the surface of the core portion 11.

### (Shell portion forming control unit)

The shell portion forming control unit 45 controls the welding head 20 to form the shell portion beads 3b while changing the inner peripheral end of the swing width of the weaving welding according to the unevenness state of the surface of the core portion 11 acquired by the surface state acquiring unit 46.

### (Procedure of method of manufacturing additive manufactured object)

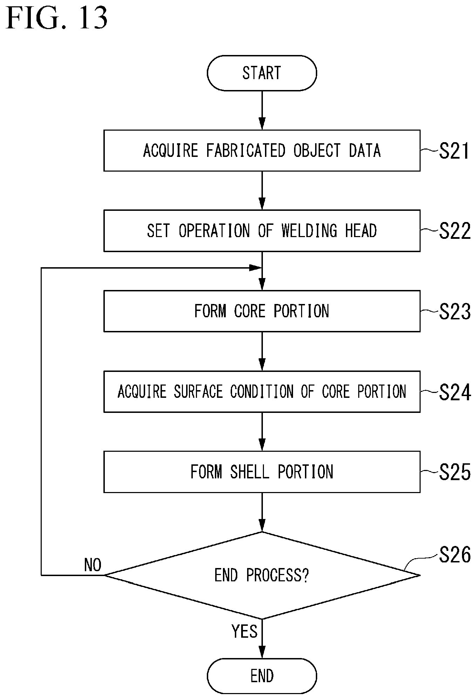

Hereinafter, a procedure of the method for producing the additive manufactured object 10 using the additive manufactured object production system 1 will be described with reference to the flowchart shown in FIG. 13. The method for producing the additive manufactured object 10 includes a manufactured object data acquiring step S21, an operation setting step S22, the core portion forming step S23, the surface state acquiring step S24, and the shell portion forming step S25.

First, the manufactured object data acquiring step S21 is performed. The operation setting step S22 is performed after the manufactured object data acquiring step S21.

In the operation setting step S22, the operation setting unit 43 sets the operation of the welding head 20 to separately form the core portion 11 and the shell portion 12 on the basis of the manufactured object data.

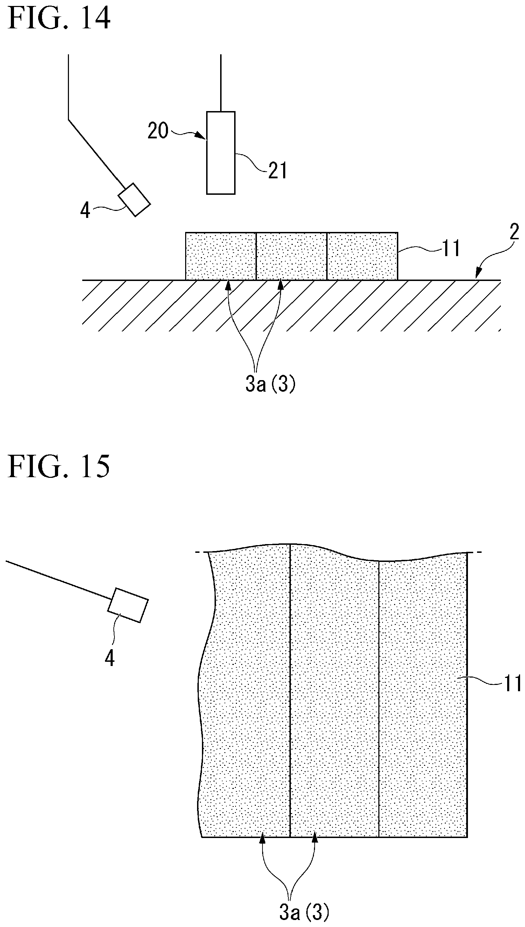

The core portion forming step S23 is performed after the operation setting step 522. As shown in FIG. 14, in the core portion forming step S23, the core portion 11 is additively formed by stacking the core portion beads 3a. FIG. 14 shows a cross-section of the formed core portion 11. In the core portion forming step S23, the core portion forming control unit 44 additively forms the core portion 11 by controlling the welding head 20 on the basis of the setting of the operation setting unit 43.

The surface state acquiring step S24 is performed after the core portion forming step S23. As shown in FIG. 15, in the surface state acquiring step S24, the surface state acquiring unit 46 controls the condition detection unit 4 to acquire the unevenness state of the surface of the core portion 11 formed by the immediately preceding core portion forming step S23. FIG. 15 is a diagram of the core portion 11 immediately after manufacturing when viewed from the normal direction. The surface state acquiring unit 46 transmits the acquired unevenness state information to the shell portion forming control unit 45.

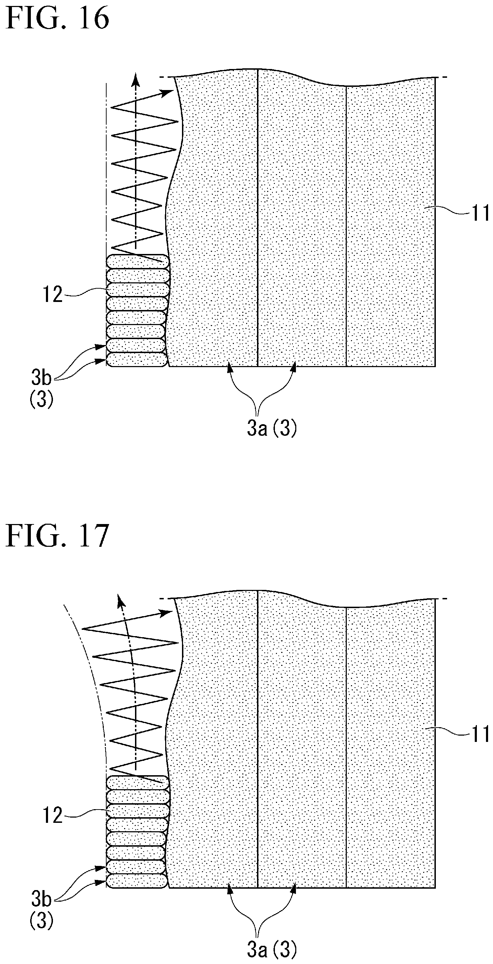

The shell portion forming step S25 is performed after the surface state acquiring step S24. As shown in FIG. 16, in the shell portion forming step, the shell portion beads 3b additively form the shell portion 12 on the surface of the core portion 11 formed in the immediately preceding core portion forming step S23. FIG. 16 is a schematic diagram of the shell portion 12 in the middle of manufacturing when viewed from the normal direction. In the shell portion forming step S25, the shell portion forming control unit 45 additively forms the shell portion 12 by controlling the welding head 20 on the basis of the setting of the operation setting unit 43 and the unevenness state of the surface of the core portion 11. The shell portion forming control unit 45 controls the welding head 20 according to the unevenness state of the surface of the core portion 11 to form the shell portion beads 3b while changing the inner peripheral end of the swing width of the weaving welding.

A determination of the end of the process is made after the shell portion forming step S25. In the determination of the end of the process, the additive forming control device 40 determines whether the producing of the additive manufactured object 10 ends on the basis of the manufactured object data (step S26). When the additive forming control device 40 determines that the producing of the additive manufactured object 10 does not end (step S26; NO), the process proceeds to the core portion forming step S23.

When the additive forming control device 40 determines that the producing of the additive manufactured object 10 ends (step S26; YES), the operation of the welding head 20 is ended. Then, finishing processing is performed on the surface of the additive manufactured object 10.

In this way, the producing of the additive manufactured object 10 is completed.

### (Operation and effect)

According to the second embodiment, it is possible to additively form the shell portion 12 after additively forming the core portion 11. Accordingly, even when waviness occurs on the side surface of the core portion 11, it is possible to absorb the waviness of the side surface of the core portion 11 by forming the shell portion 12. Thus, it is possible to improve the surface accuracy of the additive manufactured object 10.

Further, in the second embodiment, a method is adopted in which the unevenness state of the surface of the core portion 11 is acquired and the shell portion beads 3b are formed while changing the inner peripheral end of the swing width of the weaving welding on the basis of the unevenness state.

Therefore, it is possible to more appropriately absorb the waviness of the side surface of the core portion 11 by forming the shell portion 12 and to make the surface on the side opposite to the core portion 11 in the shell portion 12 as a smooth surface. Accordingly, the outer surface of the additive manufactured object 10 can be made into a smooth surface. Thus, it is possible to further improve the surface accuracy of the additive manufactured object 10.

### <Modified example of second embodiment>

Here, as a modified example of the second embodiment, for example, a configuration shown in FIG. 17 may be adopted. This modified example is different from the second embodiment in the shell portion forming control unit 45 of the additive manufactured object production system 1 and the shell portion forming step S25 of the method for producing the additive manufactured object 10.

### (Shell portion forming control unit)

As shown in FIG. 17, the shell portion forming control unit 45 controls the welding head 20 to additively form the shell portion 12 having an outer surface smoothly curved with respect to the side surface of the core portion 11. FIG. 17 is a diagram of the shell portion 12 in the middle of manufacturing when viewed from the normal direction.

### (Procedure of method of manufacturing additive manufactured object)

The method for producing the additive manufactured object 10 is performed in the same order as in the above-described second embodiment. First, the manufactured object data acquiring step S21 is performed. The operation setting step S22 is performed after the manufactured object data acquiring step S21. The core portion forming step S23 is performed after the operation setting step S22. The surface state acquiring step S24 is performed after the core portion forming step S23. The shell portion forming step S25 is performed after the surface state acquiring step S24. A determination of the end of the process is made after the shell portion forming step S25 (step S26). Hereinafter, the shell portion forming step S25 different from the second embodiment will be described.

### (Shell portion forming step)

In the shell portion forming step S25, the shell portion forming control unit 45 additively forms the shell portion 12 to absorb the waviness of the side surface of the core portion 11 by controlling the welding head 20. Further, the shell portion 12 is additively form to have an outer surface smoothly curved with respect to the side surface of the core portion 11.

### (Operation and effect)

Further, according to this modified example, it is possible to additively form the shell portion 12 having an outer surface smoothly curved with respect to the side surface of the core portion 11 while absorbing the unevenness state of the side surface of the core portion 11. Accordingly, it is possible to form the additive manufactured object 10 in an arbitrary shape while improving the surface accuracy of the additive manufactured object 10.

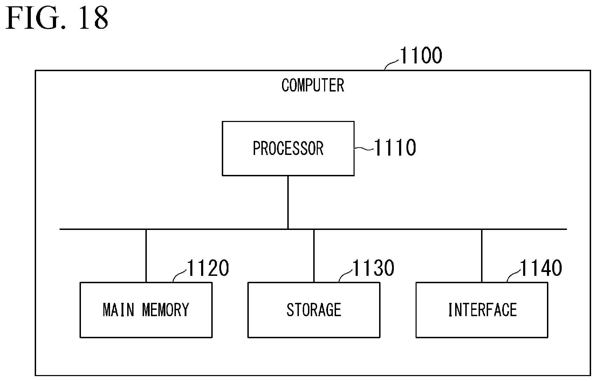

Furthermore, FIG. 18 is a hardware configuration diagram showing a configuration of a computer 1100 according to this embodiment.

The computer 1100 includes a processor 1110, a main memory 1120, a storage 1130, and an interface 1140.

The above-described additive forming control device 40 is installed in the computer. Then, the operations of each processing unit described above are stored in the storage 1130 in the form of a program. The processor 1110 reads the program from the storage 1130, expands the program to the main memory 1120, and executes the process according to the program. Further, the processor 1110 secures a storage area in the main memory 1120 according to the program.

The program may be for realizing some of the functions to be performed by the computer. For example, the program may function in combination with other programs already stored in the storage 1130 or in combination with other programs installed in other devices. Further, the computer may include a custom large scale integrated circuit (LSI) such as a programmable logic device (PLD) in addition to or in place of the above configuration. Examples of PLDs include a programmable array logic (PAL), a generic array logic (GAL), a complex programmable logic device (CPLD), and a field programmable gate array (FPGA). In this case, a part or all of the functions implemented by the processor 1110 may be implemented by the integrated circuit.

Examples of the storage 1130 include magnetic disks, magneto-optical disks, semiconductor memories, and the like. The storage 1130 may be an internal medium connected directly to the bus of computer or may be an external medium connected to the computer via the interface 1140 or a communication line. Further, when this program is distributed to the computer via a communication line, the computer that received the program may develop the program in the main memory 1120 and execute the above processing.

Further, the program may be for realizing some of the functions described above. Furthermore, the program may be a so-called difference file (difference program) that implements the above-described functions in combination with other programs already stored in the storage 1130.

### (Other embodiments)

Although the embodiments of the present disclosure have been described above in detail with reference to the drawings, the specific configuration is not limited to these embodiments and the present disclosure includes design changes within the scope of the gist of the present disclosure.

Furthermore, in the above-described embodiments, although it has been described that the surface of the stage 2 follows the horizontal plane, the present disclosure is not limited thereto and, for example, the surface may be inclined with respect to the horizontal plane.

Furthermore, in the above-described embodiments, although it has been described that the molten filler material is a metal material, the present disclosure is not limited thereto and the molten filler material may be a resin material.

Furthermore, in the above-described embodiments, although it has been described that the shell portion bead 3b is formed in a rectangular shape with the welding direction as the short side direction when viewed from the normal direction, the present disclosure is not limited thereto. When viewed from the normal direction, the shell portion bead 3b may be formed, for example, in an elliptical shape with the welding direction as the short axis direction or may be formed in a perfect circular shape.

Furthermore, in the above-described embodiments, although it has been described that the shell portion bead 3b and the core portion bead 3a are formed of the same molten filler material, the present disclosure is not limited thereto and these beads may be formed of different molten filler materials.

Furthermore, in the above-described embodiments, although it has been described that the core portion bead 3a is formed by the straight welding, the present disclosure is not limited thereto and the core portion bead 3a may be formed by the weaving welding similar to, for example, the shell portion bead 3b.

Furthermore, in the above-described embodiments, although it has been described that the molten filler material is the powder P when the welding head 20 is the laser welding head 20a, the present disclosure is not limited thereto and, for example, the molten filler material may be the wire W. Further, although it has been described that the molten filler material is the wire W when the welding head 20 is the arc welding head 20b, the present disclosure is not limited thereto and, for example, the molten filler material may be the powder P.

Furthermore, in the above-described embodiments, although it has been described that only the welding head 20 is operated when forming the core portion 11 and the shell portion 12, the present disclosure is not limited thereto and, for example, the stage 2 may be operated or both the welding head 20 and the stage 2 may be operated.

Furthermore, in the above-described embodiments, although it has been described that the shell portion 12 is additively formed after part of the core portion 11 is additively formed, the present disclosure is not limited thereto and, for example, the shell portion 12 may be additively formed after the entire core portion 11 is additively formed.

Furthermore, in the core portion forming step S23 of the above-described embodiment, although it has been described that all of the core portion beads 3a formed as described above have substantially the same resolution, the present disclosure is not limited thereto. For example, the core portion 11 may be divided into a plurality of regions and the resolution of the core portion bead 3a may be changed for each region.

Furthermore, in the above-described embodiments, although it has been described that a plurality of layers of the core portions 11 are formed by one core portion forming step S23, the present disclosure is not limited thereto and only one layer of the core portion 11 may be formed by one core portion forming step S23.

Furthermore, in the shell portion forming step S25 of the above-described embodiment, although it has been described that all of the shell portion beads 3b formed as described above have substantially the same resolution, the present disclosure is not limited thereto. For example, the shell portion 12 may be divided into a plurality of regions and the resolution of the shell portion bead 3b may be changed for each region.

Furthermore, in the above-described embodiments, although it has been described that the second resolution of the shell portion bead 3b is higher than the first resolution of the core portion bead 3a, the present disclosure is not limited thereto. The shell portion bead 3b and the core portion bead 3a may have the same resolution.

Furthermore, in the weaving welding of the above-described embodiment, although it has been described that the heat source and the molten filler material are made to swing in a direction perpendicular to the welding direction, the present disclosure is not limited thereto. In the weaving welding, the heat source and the molten filler material may swing, for example, in an 8 shape when viewed from the normal direction, may swing in a circular shape when viewed from the normal direction, may swing in a U shape opening in the welding direction when viewed from the normal direction, or may swing in an asymmetrical shape across the welding direction when viewed from the normal direction.

Furthermore, although it has been described that the weaving welding of the above-described embodiment is performed by swinging both the heat source and the molten filler material, the present disclosure is not limited thereto and the weaving welding may be performed by swinging only the heat source or only the molten filler material. When swinging only the heat source, the manufacturing safety can be improved. When swinging only the molten filler material, heat input controllability can be improved.

### <Appendix>

The method for producing the additive manufactured object 10 and the additive manufactured object production system 1 described in each embodiment are understood, for example, as below.
(1) The method for producing the additive manufactured object 10 according to a first aspect includes: the shell portion forming steps S14 and S25 of additively forming the shell portion 12 corresponding to the outer portion of the additive manufactured object 10 by the shell portion bead 3b formed by weaving welding; and the core portion forming steps S15 and S23 of additively forming the core portion 11 corresponding to the inner portion of the additive manufactured object 10 by the core portion bead 3a formed by welding.

Accordingly, it is possible to more densely form the shell portion 12 by forming the shell portion bead 3b using the weaving welding.

(2) The method for producing the additive manufactured object 10 of a second aspect is the method for producing the additive manufactured object 10 of the first aspect, wherein the core portion forming step S15 may be performed after the shell portion forming step S14.

Accordingly, it is possible to additively form the core portion 11 after additively forming the shell portion 12. Thus, it is possible to form the core portion 11 so that the side surface of the core portion 11 is supported by the shell portion 12. Therefore, it is possible to suppress the occurrence of sagging on the side surface of the core portion 11 due to its own weight. Thus, it is possible to improve the surface accuracy of the additive manufactured object 10.

(3) The method for producing the additive manufactured object 10 of a third aspect is the method for producing the additive manufactured object 10 of the second aspect, wherein in the shell portion forming step S14, the shell portion 12 may be formed so that the outer surface of the shell portion 12 has an overhang shape forming an acute angle with respect to the horizontal plane.

Accordingly, it is possible to additively form the shell portion 12 in an overhang shape before additively forming the core portion 11.

(4) The method for producing the additive manufactured object 10 of a fourth aspect is the method for producing the additive manufactured object 10 of the first aspect, wherein the shell portion forming step S25 may be performed after the core portion forming step S23.

Accordingly, it is possible to additively form the shell portion 12 after additively forming the core portion 11. Accordingly, even when waviness occurs on the side surface of the core portion 11, it is possible to absorb the waviness of the side surface of the core portion 11 by forming the shell portion 12.

(5) The method for producing the additive manufactured object 10 of a fifth aspect is the method for producing the additive manufactured object 10 of the fourth aspect, further including: the surface state acquiring step S24 provided between the core portion forming step S23 and the shell portion forming step S25 to acquire the unevenness state of the surface of the core portion 11, wherein in the shell portion forming step S25, the shell portion bead 3b may be formed while changing the inner peripheral end of the swing width of the weaving welding according to the unevenness state of the surface of the core portion 11 acquired by the surface state acquiring step S24.

Accordingly, it is possible to form the shell portion 12 according to the surface state of the core portion 11. Therefore, it is possible to absorb the waviness of the side surface of the core portion 11 and to make the surface on the side opposite to the core portion 11 in the shell portion 12 as a smooth surface. Accordingly, the outer surface of the additive manufactured object 10 can be made as a smooth surface.

(6) The method for producing the additive manufactured object 10 of a sixth aspect is the method for producing the additive manufactured object 10 of any one of the first to fifth aspects, wherein in the core portion forming step S15, the core portion bead 3a may be formed by the first resolution and in the shell portion forming step S14, the shell portion bead 3b may be formed by the second resolution higher than the first resolution.

Accordingly, it is possible to improve the surface accuracy of the additive manufactured object 10 immediately after the additive manufacturing compared to a case in which the core portion 11 and the shell portion 12 are formed by the weld bead 3 having the first resolution.

Further, it is possible to shorten the time required for producing the entire additive manufactured object 10 compared to a case in which the core portion 11 and the shell portion 12 are formed by the weld bead 3 having the second resolution higher than the first resolution. Therefore, it is possible to efficiently form the additive manufactured object 10.

(7) The method for producing the additive manufactured object 10 of a seventh aspect is the method for producing the additive manufactured object 10 of any one of the first to sixth aspects, wherein the core portion forming steps S15 and S23 and the shell portion forming steps S14 and S25 may be performed by laser welding or electron beam welding.

By adjusting the spot shape of the laser beam L, it is possible to easily adjust the resolution of the weld bead 3. By increasing the resolution of the weld bead 3, it is possible to improve the accuracy of the additive manufactured object 10.

(8) The method for producing the additive manufactured object 10 of an eighth aspect is the method for producing the additive manufactured object 10 of any one of the first to sixth aspects, wherein the core portion forming steps S15 and S23 and the shell portion forming steps S14 and S25 may be performed by arc welding.

Accordingly, since it is possible to form the weld bead 3 at a high speed, it is possible to shorten the time required for producing the additive manufactured object 10.

(9) The additive manufactured object production system 1 of a ninth aspect includes: the welding head 20; and the additive forming control device 40 which controls the welding head 20 so that the welding head 20 forms the additive manufactured object 10, wherein the additive forming control device 40 includes the shell portion forming control unit 45 which controls the welding head 20 so that the shell portion 12 corresponding to the outer portion of the additive manufactured object 10 is additively formed by the shell portion bead 3b formed by weaving welding and the core portion forming control unit 44 which controls the welding head 20 so that the core portion 11 corresponding to the inner portion of the additive manufactured object 10 is additively formed by the core portion bead 3a formed by welding.

(10) The additive manufactured object production system 1 of a tenth aspect is the additive manufactured object production system 1 of the ninth aspect, wherein the core portion forming control unit 44 may control the welding head 20 to additively form the core portion 11 after additively forming the shell portion 12.

(11) The additive manufactured object production system 1 of an eleventh aspect is the additive manufactured object production system 1 of the tenth aspect, wherein the shell portion forming control unit 45 may control the welding head 20 to form the shell portion 12 so that the outer surface of the shell portion 12 has an overhang shape forming an acute angle with respect to the horizontal plane.

(12) The additive manufactured object production system 1 of a twelfth aspect is the additive manufactured object production system 1 of the ninth aspect, wherein the shell portion forming control unit 45 may control the welding head 20 to additively form the shell portion 12 after additively forming the core portion 11.

(13) The additive manufactured object production system 1 of a thirteenth aspect is the additive manufactured object production system 1 of the twelfth aspect, wherein the additive forming control device 40 may further include the surface state acquiring unit 46 which acquires the unevenness state of the surface of the core portion 11, and wherein the shell portion forming control unit 45 may control the welding head 20 to form the shell portion bead 3b while changing the inner peripheral end of the swing width of the weaving welding according to the unevenness state of the surface of the core portion 11 acquired by the surface state acquiring unit 46.

(14) The additive manufactured object production system 1 of a fourteenth aspect is the additive manufactured object production system 1 of any one of the ninth to thirteenth aspects, wherein the core portion forming control unit 44 may control the welding head 20 to form the core portion bead 3a by the first resolution and the shell portion forming control unit 45 may control the welding head 20 to form the shell portion bead 3b by the second resolution higher than the first resolution.

(15) The additive manufactured object production system 1 of a fifteenth aspect is the additive manufactured object production system 1 of any one of the ninth to fourteenth aspects, wherein the welding head 20 may be the laser welding head 20a which performs additive manufacturing by laser welding or the electron beam forming head which performs additive manufacturing by electron beam welding.

(16) The additive manufactured object production system 1 of a sixteenth aspect is the additive manufactured object production system 1 of any one of the ninth to fourteenth aspects, wherein the welding head 20 may be the arc welding head 20b which performs additive manufacturing by arc welding.

### Industrial Applicability

According to the additive manufactured object manufacturing method and the additive manufacturing system of the present disclosure, it is possible to improve the surface accuracy of the additive manufactured object.

### Reference Signs List

1 Additive manufacturing system
2 Stage
3 Weld bead
3a Core portion bead
3b Shell portion bead
4 Condition detection unit
10 Additive manufactured object
11 Core portion
12 Shell portion
20 Welding head
20a Laser welding head
20b Arc welding head
21 Head body
22 Laser source
23 Laser passage
24 Powder supply path
26 Electrode
27 Wire insertion passage
40 Additive forming control device
41 Manufactured object data acquiring unit
42 Region specifying unit
43 Operation setting unit
44 Core portion forming control unit
45 Shell portion forming control unit
46 Surface condition acquiring unit
1100 Computer
1110 Processor
1120 Main memory
1130 Storage
1140 Interface
A Arc
L Laser beam
P Powder
S11, S21 Manufactured object data acquiring step
S12 Region specifying step
S13, S22 Operation setting step
S14, S25 Shell portion forming step
S15, S23 Core portion forming step
S24 Surface condition acquiring step
W Wire
W1 Width
W2 Width

## Claims

1. A production method for additive manufactured object, the method comprising:
a shell portion forming step of additively forming a shell portion as an outer portion of an additive manufactured object by stacking shell portion beads formed by weaving welding; and
a core portion forming step of additively forming a core portion as an inner portion of the additive manufactured object by stacking core portion beads formed by welding.

2. The production method according to claim 1,
wherein the core portion forming step is performed after the shell portion forming step.

3. The production method according to claim 2,
wherein in the shell portion forming step, the shell portion is formed so that an outer surface of the shell portion is formed in an overhang shape having an acute angle with respect to a horizontal plane.

4. The production method according to claim 1,
wherein the shell portion forming step is performed after the core portion forming step.

5. The production method according to claim 4, further comprising:
a surface condition acquiring step of acquiring an unevenness of a surface of the core portion at a time between the core portion forming step and the shell portion forming step,
wherein in the shell portion forming step, the shell portion beads are formed while changing an inner peripheral end of a swing width of the weaving welding according to the unevenness of the surface of the core portion acquired by the surface condition acquiring step.

6. The production method according to any one of claims 1 to 5,
wherein in the core portion forming step, each of the core portion beads is formed so as to correspond to a first resolution, and
wherein in the shell portion forming step, each of the shell portion beads is formed so as to correspond to a second resolution higher than the first resolution.

7. The production method according to any one of claims 1 to 6,
wherein the core portion forming step and the shell portion forming step are performed by laser welding or electron beam welding.

8. The production method according to any one of claims 1 to 6,
wherein the core portion forming step and the shell portion forming step are performed by arc welding.

9. A production system for additive manufactured object, comprising:
a welding head; and
an additive forming control device which is configured to control the welding head so that an additive manufactured object is formed by the welding head,
wherein the additive forming control device includes: a shell portion forming control unit which is configured to control the welding head to additively form a shell portion corresponding to an outer portion of the additive manufactured object by stacking shell portion beads formed by weaving welding; and a core portion forming control unit which is configured to control the welding head to additively form a core portion corresponding to an inner portion of the additive manufactured object by stacking core portion beads formed by welding.

10. The additive forming system according to claim 9,
wherein the core portion forming control unit controls the welding head to additively form the core portion after additively forming the shell portion.

11. The additive forming system according to claim 10,
wherein the shell portion forming control unit controls the welding head to form the shell portion so that an outer surface of the shell portion is formed in an overhang shape forming an acute angle with respect to a horizontal plane.

12. The additive forming system according to claim 9,
wherein the shell portion forming control unit controls the welding head to additively form the shell portion after additively forming the core portion.

13. The additive forming system according to claim 12,
wherein the additive forming control device further includes a surface condition acquiring unit which is configured to acquire an unevenness of a surface of the core portion, and
wherein the shell portion forming control unit controls the welding head to form the shell portion beads while changing an inner peripheral end of a swing width of the weaving welding according to the unevenness of the surface of the core portion acquired by the surface condition acquiring unit.

14. The additive forming system according to any one of claims 9 to 13,
wherein the core portion forming control unit controls the welding head to form the core portion beads each corresponding to a first resolution, and
wherein the shell portion forming control unit controls the welding head to form the shell portion beads each corresponding to a second resolution higher than the first resolution.

15. The additive forming system according to any one of claims 9 to 14,
wherein the welding head is a laser welding head performing an additive formation with laser welding or an electron beam head performing an additive formation with electron beam welding.

16. The additive forming system according to any one of claims 9 to 14,
wherein the welding head is an arc welding head performing an additive formation with arc welding.
